# EUROPEAN PATENT SPECIFICATION

(11) **EP 3 388 658 B1**
(45) Date of publication and mention of the grant of the patent: **14.08.2019**
(21) Application number: 18161134.4
(22) Date of filing: 12.03.2018
(51) Int. Cl.: F02K 3/04, F02K 3/06, F02C 7/045, F02C 7/24, F04D 29/66

(54) **GAS TURBINE ENGINE WITH A FAN HAVING AN ACOUSTIC ATTENUATOR**
GASTURBINENMOTOR MIT EINEM BLÄSER UMFASSEND EINEN AKUSTISCHEN DÄMPFER
MOTEUR À TURBINE À GAZ AVEC UNE SOUFFLANTE AYANT UN AMORTISSEUR ACOUSTIQUE

(30) Priority: 10.04.2017 GB 201705732
(43) Date of publication of application: 17.10.2018
(73) Proprietor: Rolls-Royce plc, London SW1E 6AT (GB)
(72) Inventor: Carugno, Piera, Derby, Derbyshire DE24 8BJ (GB)
(74) Representative: Rolls-Royce plc

(56) References cited:
- US-A1- 2016 032 832

## Description

The present disclosure concerns acoustic attenuation in gas turbine engines and, in particular, in the interstage flow region of gas turbine engines.

There are many acoustic noise sources in modern gas turbine engines. In particular, acoustic noise can be produced in a gas turbine engine as the airflow interacts with the fan and the engine section stator (ESS). These acoustic noises can reflect and refract within the engine and escape from the engine forward back though the fan or down the bypass duct or core.

US2016/032832 relates to a fan section for a gas turbine engine having a nose cone that includes a noise attenuation feature.

It is generally desirable to reduce the overall level of noise which is produced by a gas turbine engine for reasons such as reducing noise pollution. Therefore, it will be understood that it would be desirable to reduce or attenuate noise escaping from gas turbine engines.

According to a first aspect there is provided a gas turbine engine comprising: a fan comprising a plurality of fan blades; a support structure downstream of the fan comprising an engine section stator configured to guide air received from the fan, the fan being rotatable with respect to the engine section stator; an interstage flow region defined between the fan blades and the engine section stator; and an acoustic attenuator provided on at least a portion of a rotatable section of a radially-inner boundary of the interstage region to attenuate acoustic waves in the interstage flow region.

The radially inner boundary of the interstage flow region may extend from between the fan blades to between the engine section stators.

The rotatable section may be defined as any portion of the inner boundary that rotates with the fan blades in use.

The acoustic attenuator may be provided on substantially all of the radially-inner boundary of the interstage flow region. The radially-inner boundary may be a radially-inner gas-washed or wetted surface of the interstage flow region. The acoustic attenuator may at least partly define the radially-inner boundary. The radially-inner boundary may be a radially-innermost boundary of an air flow through the interstage flow region. The radially-inner boundary may be formed or defined by a plurality of components of the gas turbine engine. Some parts of the radially-inner boundary may rotate with respect to other parts of the radially inner boundary. The acoustic attenuator may be provided across an entire width of the radially-inner boundary of the interstage region between the fan blades and the engine section stator, or only on a portion thereof. The acoustic attenuator may comprise a plurality of acoustic attenuators provided on portions of the radially-inner boundary of the interstage region.

Wherever it is described herein that a feature is downstream of the fan blades, this term may also mean downstream of an intersection of the fan blades with the fan platform. For example, a radially-outer part of one or more of the fan blades may overhang or extend downstream further than at the blade's root, but a feature may be described as downstream of the fan blades even if it is upstream of this overhanging portion of the fan blade, provided that the feature is downstream of the fan blade's intersection with the fan platform.

The fan may comprise a fan platform. The acoustic attenuator may be arranged on a portion of the fan platform downstream of the fan blades to define the radially-inner boundary of the interstage flow region.

The acoustic attenuator or part thereof may also extend upstream on the fan platform between the fan blades or upstream of the fan blades. Thus, at least a part of the acoustic attenuator may extend between the fan blades to define at least a portion of the radially inner boundary of the interstage flow region.

The fan platform may be rotatable with the fan with respect to the engine section stator, or with respect to other portions of the gas turbine engine defining the radially-inner boundary of the interstage flow region.

The fan platform may be defined by a fan root platform which intersects the plurality of fan blades and by a fan seal structure downstream of the fan root platform. The fan seal structure may be configured to seal with the support structure. The fan seal structure may be rotatable with the fan in respect to the support structure (i.e. static with respect to the fan), may be rotatable with respect to both the fan and the support structure, or may be static with respect to the support structure (i.e. the fan being rotatable with respect to the fan seal structure and support structure). In some examples the fan platform may be defined by the fan root platform only.

The fan root platform may comprise one or more fan blade platforms arranged between the fan blades. A portion of the fan root platform may also form a radially-inner boundary of a fan flow region which is upstream of the radially-inner boundary of the interstage flow region. A downstream end of the fan root platform and an upstream end of the fan seal structure may comprise complimentary features which co-operate such that the radially-inner boundary of the interstage flow region is substantially continuous or such that flow disturbance across a gap between the fan root platform and the fan seal structure is reduced. The fan root platform and the fan seal structure may be substantially dynamically decoupled such that vibration or forces from the fan root platform are not applied to the fan seal structure.

The acoustic attenuator may be arranged on a downstream extension of the fan root platform which extends downstream of the fan blades to define at least a portion of the radially-inner boundary of the interstage flow region.

The downstream extension may extend a certain distance downstream of the fan blades, or extend across a certain proportion of the radially-inner boundary of the interstage flow region. In some examples, the downstream extension may extend across substantially all of the interstage flow region. A downstream extension may not be provided. The downstream extension may be formed integrally to the fan root platform, or may be formed as a separate component which is attached to the fan root platform.

The acoustic attenuator may be arranged on the fan seal structure to define at least a portion of the radially-inner boundary of the interstage flow region.

The fan seal structure may extend a certain distance across the radially-inner boundary of the interstage flow region, or extend across a certain proportion of the radially-inner boundary of the interstage flow region. The fan seal structure may extend across an entire width of the interstage flow region between the fan blades and the engine section stator. In some examples, a fan seal structure may not be provided. The gas turbine engine may comprise more than one fan seal structure of the type described herein.

The fan seal structure may extend between the fan blades and the engine section stator to form substantially the entire radially-inner boundary of the interstage flow region, or may extend across only a portion of the radially-inner boundary of the interstage flow region. The fan seal structure may comprise a radially-outer surface which may form a portion of the radially-inner boundary of the interstage flow region, or upon which the acoustic attenuator can be provided to form a portion of the radially-inner boundary of the interstage flow region.

The support structure may comprise a stator root platform extending upstream of the engine section stator. The acoustic attenuator may be arranged on the stator root platform to define at least a portion of the radially-inner boundary of the interstage flow region.

The stator root platform may also extend downstream between a plurality of vanes of the engine section stator or downstream thereof. The acoustic attenuator may also extend downstream of the engine section stator or vanes thereof. The radially-inner boundary of the interstage flow region may be upstream of a plurality of vanes of the engine section stator, or may extend downstream of the plurality of vanes.

A portion of the stator root platform may extend upstream of the engine section stator or a plurality of vanes thereof. This upstream portion of the stator root platform may be referred to as an upstream extension of the stator root platform. Such an upstream extension may or may not be present. The upstream extension may extend a certain distance across the radially-inner boundary of the interstage flow region, or extend across a certain proportion of the radially-inner boundary of the interstage flow region. The upstream extension may extend across substantially all of the interstage flow region. In some examples, an upstream extension may not be provided.

The stator root platform, or any upstream extension thereof, may be arranged downstream of the fan seal structure, which in turn may be arranged downstream of the fan root platform, or any downstream extension thereof.

The downstream extension of the fan root platform, the fan seal structure (or multiple fan seal structures), or the upstream extension of the stator root platform may, alone or in combination, define substantially all of the radially-inner boundary of the interstage flow region.

The engine may further comprise a nacelle that houses the fan and the engine section stator. A radially-outer boundary of the interstage flow region may be defined by the nacelle.

The acoustic attenuators of any of the fan root platform, the fan seal structure, or the stator root platform may be flush-mounted to these components such that the radially-inner boundary of the interstage flow region substantially follows a smooth air foil profile without in-steps or out-steps. The acoustic attenuator may be connected by welding, by mechanical coupling such as bolting or riveting, or could also be manufactured integrally with the fan root platform, the fan seal structure, or the stator root platform, for example by additive manufacturing.

The acoustic attenuator may be an acoustically attenuating layer or component which reduces noise by absorbing or cancelling acoustic waves impinging on the attenuator. The acoustic attenuator may comprise a bulk absorber or one or more Helmholtz resonators.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a detailed sectional side view of the radially-inner boundary of the interstage flow region of the gas turbine engine of Figure 1;
**Figure 3** is a detailed sectional side view of an alternative radially-inner boundary of the interstage flow region of Figure 2;
**Figure 4** is a detailed sectional side view of further alternative radially-inner boundary of the interstage flow region of Figure 2; and
**Figure 5** is a detailed sectional side view of further alternative radially-inner boundary of the interstage flow region of Figure 2.

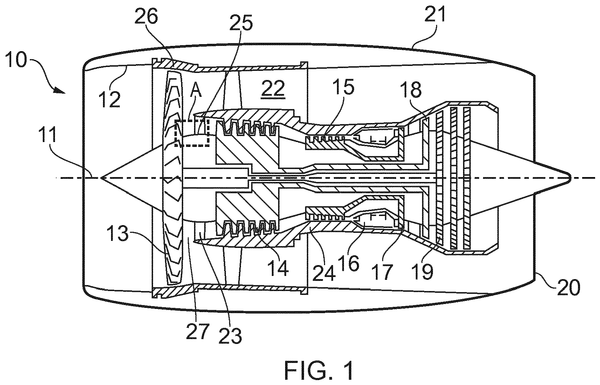

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

An inner casing 24 houses the compressors, 14,15, the combustion equipment 16, and the turbines 17, 18, 19 through which a core airflow passes. Engine section stators 23 are provided at an upstream end of an inner casing 24 of the engine 10. The engine section stators 23 are stator vanes which direct the air entering the inner casing 24 appropriately, for example to improve the engine performance.

The axial area of the engine between the fan 13 and the engine section stators 23 is generally known as the interstage flow region 27. Airflow in this region has passed through the fan stage, but has not yet entered the core airflow in the compressor stage or the bypass flow in the bypass duct 22.

The interstage flow region 27 has a radially-inner boundary 25 and a radially-outer boundary defined by an outer casing 26 within the nacelle 21. It will be understood that the interstage flow region 27 has a generally annular shape with an axial length substantially equal to the axial distance between the downstream end of the fan 13 and the upstream end of the engine section stator 23, and a radial width equal to a radial distance between the radially-inner boundary 25 and the radially inner boundary of the outer casing 26. The radially-inner boundary 25 may also be referred to as a gas-washed radially-inner surface of the interstage flow region 27, in the sense that the gas flow through the engine 10 washes over the radially-inner boundary 25. In other examples, the interstage flow region may be defined as the axial portion of the engine between the trailing edge of the fan blades 30 and the outlet guide vanes of the bypass passage.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

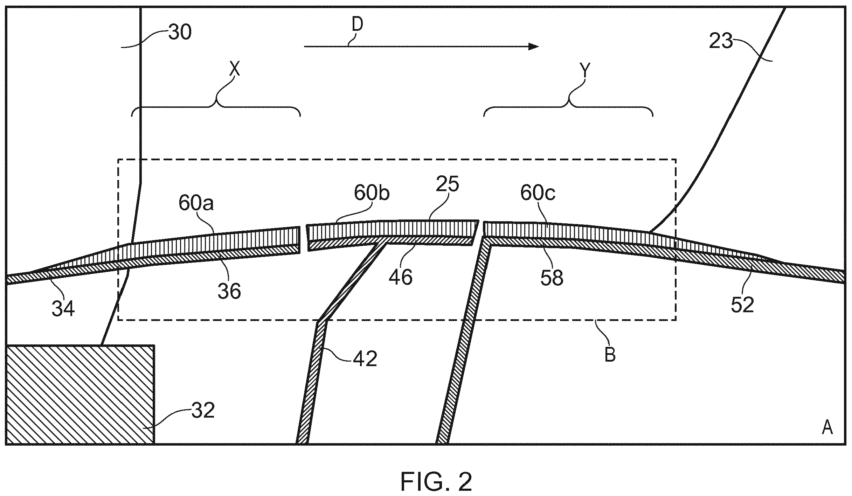

The radially-inner boundary 25 of the interstage flow region 27 is shown in more detail in **Figure 2****.** In particular, **Figure 2** illustrates a close-up view of the area A of Figure 1. **Figure 2** shows a cross-sectional side view through the radially-inner boundary 25 of the interstage flow region 27. It will be understood that the radially-inner boundary 25 is generally rotationally symmetrical about the engine 10.

The general direction of airflow through the interstage flow region 27 is illustrated by the arrow. At the left-hand edge of **Figure 2****,** which is the upstream end within the engine 10, the components of the fan 13 are shown. The fan comprises a plurality of fan blades 30 which extend generally in the radial direction from a fan disc 32. The fan blades 30 are secured in the fan disc 32 by a fir-tree or similar arrangement. The fan disc 32 is arranged on a rotating shaft which is driven by the low pressure turbines 19 such that the fan 13 rotates and drives air into the engine 10.

The part of the fan blade 30 near its radially-inner end may also be referred to generally as the root of the fan. As it is not desirable for the airflow through the fan 13 to flow directly over the fan disc 32, each fan blade 30 extends through a fan root platform 34 at or near the root of the blade 30. The cross-section of **Figure 2** is taken at a location between fan blades 30, so the fan blade 30 illustrated cannot be seen passing through the fan root platform 34, but it will be understood that this occurs.

The fan root platform 34 may be a continuous element which extends between all of the fan blades 30, or may be formed of a plurality of elements which each extend between adjacent fan blades 30 to form a substantially continuous fan root platform 34. The fan root platform 34 rotates with the rest of the fan 13.
A portion of the fan root platform 34 extends a distance X downstream of the intersection of the fan blades 30 with the fan root platform 34. This extending portion of the fan root platform 34 forms a downstream extension 36 of the fan root platform. In some cases, such a downstream extension may not be present. The downstream extension 36 thus extends axially into the interstage flow region 27. The downstream extension 36 therefore forms a generally annular surface which extends into the interstage flow region 27 to form a portion of the radially-inner boundary 25 of the interstage flow region 27.

A downstream end of the fan root platform 34 extends axially within the engine up to an upstream end of a fan seal structure 42. The fan seal structure 42 is connected to the same rotatable shaft as the fan disc 32. Therefore, the fan seal structure 42 rotates with the fan 13. The fan root platform 34 and the fan seal structure 42 are therefore rotationally static with respect to one another during rotation of the fan 13. In other arrangements, the fan seal structure 42 and the fan root platform 34 may not rotate together. For example, the fan seal structure 42 might be static with the fan 13 rotatable relative thereto.

The fan seal structure 42 comprises radially-outermost annular extension 46 which extends axially within the engine 10. The annular extension 46 therefore forms a portion of the radially-inner boundary 25 of the interstage flow region 27 downstream of the downstream extension 36.

The fan seal structure 42 comprises a sealing portion (not shown) which engages with a sealing portion (not shown) of the stator root platform 52 to form a seal between the fan seal structure 42 and the stator root platform 52. This seal may prevent air from entering undesired areas of the engine 10. Many types of seals suitable for this purpose are known, so the specific arrangement of the seal will not be discussed further.

The fan root platform 34 and the fan seal structure 42 may be described in combination as forming a fan platform. The fan platform is generally the radially-innermost boundary of the air flow path through and immediately downstream of the fan. The portion of the fan platform in the interstage flow region 27 therefore comprises the downstream extension 36 of the fan root platform 34 and the annular extension 46 of the fan seal structure 42. The radially-inner boundary 25 may therefore comprise the fan platform, and in particular, the downstream extension 36 and the annular extension 46.

Downstream of the fan seal structure 42 is the stator root platform 52. The stator root platform 52 is the radially-innermost surface of the support structure of the engine 10, and generally forms part of the inner casing 24. The engine section stators 23 extend radially outwards from the stator root platform 52. A portion of the stator root platform 52 extends a distance Y axially upstream of the roots of the engine section stators 23. This extending section forms an upstream extension 58 of the stator root platform 52. The upstream extension 58 generally forms an annular surface which extends into the interstage flow region 27 to form a portion of the radially-inner boundary 25. In other examples, no upstream extension 58 may be provided.

It will be understood that in the arrangement of **Figure 2****,** the downstream extension 36, the annular extension 46, and the upstream extension 58 in combination form the entirety of the radially-inner boundary 25 of the interstage flow region 27. In some cases, one or more of the downstream, annular, or upstream extensions 36, 46, 58 may not be present, in which case the other parts which are present will form the radially-inner boundary 25.

According to the invention, an acoustic attenuator 60 is provided on at least a portion of the radially-inner boundary 25 of the interstage flow region 27. In the arrangement of **Figure 2****,** the acoustic attenuator 60 comprises three parts: a fan attenuator 60a, a seal attenuator 60b, and a stator attenuator 60c.

The fan attenuator 60a is formed on the fan root platform 34, and more specifically on the radially-outer surface of the downstream extension 36. The fan attenuator 60a is flush-mounted to the radially outer surface of the downstream extension 36 such that the fan attenuator 60a and the rest of the radially-inner boundary 25 form a smooth air foil profile. The fan attenuator 60a is a layer of acoustically attenuating material which covers the downstream extension to attenuate acoustic waves which interact with the portion of the radially-inner boundary 25 formed by the downstream extension 36.

The seal attenuator 60b is formed on the radially-outer surface of the annular extension 46 of the fan seal structure 42. The seal attenuator 60b is flush-mounted to the radially outer surface of the annular extension 46 such that the seal attenuator 60b and the rest of the radially-inner boundary 25 forms a smooth air foil profile. Like the fan attenuator 60a, the seal attenuator 60b is a layer of acoustically attenuating material which covers the annular extension 46 to attenuate acoustic waves which interact with the portion of the radially-inner boundary 25 formed by the annular extension 46.

The stator attenuator 60c is formed on the radially-outer surface of the upstream extension 58 of the stator root platform 52. The stator attenuator 60c is flush-mounted to the radially outer surface of the upstream extension 58 such that the stator attenuator 60c and the rest of the radially-inner boundary 25 forms a smooth air foil profile. Like the fan attenuator 60a and the seal attenuator 60b, the stator attenuator 60c is a layer of acoustically attenuating material which covers the upstream extension 58 to attenuate acoustic waves which interact with the portion of the radially-inner boundary 25 formed by the upstream extension 58.

As the stator attenuator 60c is formed on the static stator root platform 52, and the fan and seal attenuators 60a,b are formed on the rotatable fan root platform 34 and the fan seal structure 42, the fan and seal attenuators 60a,b will rotate with respect to the stator attenuator 60c when the engine 10 is running. Nevertheless, the three separate attenuators of the fan, seal, and stator in combination form an acoustic attenuator 60 which is provided on the radially-inner boundary 25 of the interstage flow region 27.

In other examples, the fan, seal, and stator attenuators 60a, 60b, 60c may be formed of different acoustically attenuating materials. In some examples, the acoustic attenuators 60a, 60b, 60c may comprise a bulk absorber or one or more Helmholtz resonators. Furthermore in some examples, the acoustic attenuator 60, or parts thereof may not be a separate layer to the downstream, annular, or upstream extensions 36, 46, 58 and/or may be a surface texture or surface structure of the material of the extensions which acts to attenuate acoustic waves.

As shown in **Figure 2****,** the fan and stator attenuators 60a and 60c may also extend upstream and downstream respectively outside the axial range of the interstage flow region 25. In particular, the fan attenuator 60a may extend upstream between the fan blades 30, or possibly even upstream of the fan blades 30 on the fan root platform 34. Similarly, the stator attenuator 60c may extend downstream between the engine section stators 23, or even downstream of the engine section stators 23 on the stator root platform 52.

In **Figure 2****,** the fan attenuator 60a may taper in thickness towards its upstream end to provide a smooth transition for airflow on to the fan attenuator 60a and the radially-inner boundary 25. Similarly, the stator attenuator 60c may taper towards its downstream end to provide a smooth transition off the attenuator and the radially-inner boundary 25. Similar tapering of the attenuator may be provided on one or both ends of the seal attenuator 60b, or on the other ends of the fan and stator attenuators 60a, c.

The attenuator 60 on the radially-inner boundary 25 serves to attenuate acoustic noise which reflects around the interstage flow region, and thereby reduce the overall noise level of the engine 10. As the dimensions of gas turbine engines are further constrained by design requirements, the reflection and refraction of noise within the engine increases due to the surfaces of the engine being closer to one another. Therefore, there may be an increased desire for acoustic attenuation to be included where it previously has not been possible or feasible to be located.

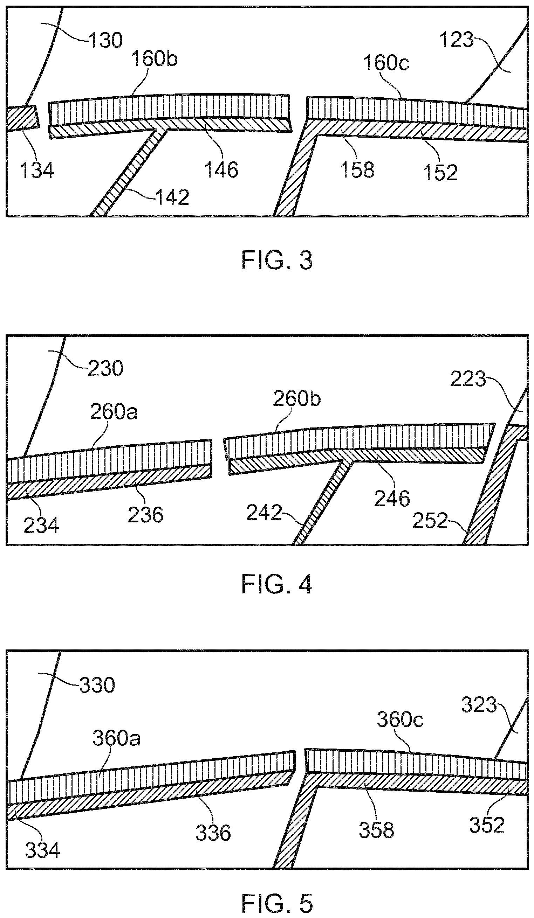

In some examples, one or more of the fan, seal, and stator attenuators 60a, b, and c may be omitted. For example, only the seal attenuator 60b may be provided and the downstream extension 36 and the upstream extension 58 may be left uncovered, provided that at least a portion of the radially-inner boundary 25 of the interstage flow region 27 has an acoustic attenuator provided thereon. Some examples of alternative arrangements which omit one or more of the fan, seal, and stator attenuators 60a,b,c are shown in **Figures 3, 4, and 5****.**

**Figure 3** shows an alternative arrangement of the radially-inner boundary the interstage flow region of **Figure 2****.** In particular, **Figure 3** shows only the portion within the area B of **Figure 2****.** Like features between Figures 2 and 3 are separated by reference numerals spaced apart by 100. In this arrangement, no downstream extension of the fan root platform 134 is provided and the entire radially-inner boundary 125 of the interstage flow region 127 is formed by the annular extension 146 of the fan seal structure 142 and the upstream extension 158 of the stator root platform 152. The acoustic attenuator 160 which is provided on the radially-inner boundary 125 of the interstage flow region 127 therefore comprises only the seal attenuator 160b and the stator attenuator 160c. The attenuators 160b, c may be flush-mounted and tapered in parts like those of **Figure 2** to provide smooth air flow transitions.

**Figure 4** shows a further alternative arrangement of the radially-inner boundary of the interstage flow region shown in **Figure 2****.** In particular, **Figure 4** shows only the portion within the area B of **Figure 2****.** Like features between Figures 2 and 4 are separated by reference numerals spaced apart by 200. In this arrangement, no upstream extension of the stator root platform 252 is provided and the entire radially-inner boundary 225 of the interstage flow region 227 is formed by the downstream extension 236 of the fan root platform 234 and the annular extension 246 of the fan seal structure 242. The acoustic attenuator 260 which is provided on the radially-inner boundary 225 of the interstage flow region 227 therefore comprises only the fan attenuator 260a and the seal attenuator 260b. The attenuators 260a, b may be flush mounted and tapered in parts like those of **Figure 2** to provide smooth air flow transitions.

**Figure 5** shows a further alternative arrangement of the radially-inner boundary of the interstage flow region shown in **Figure 2****.** In particular, **Figure 5** shows only the portion within the area B of **Figure 2****.** Like features between Figures 2 and 5 are separated by reference numerals spaced apart by 300. In this arrangement, no fan seal structure is provided and the entire radially-inner boundary 325 of the interstage flow region 327 is formed by the downstream extension 336 of the fan root platform 334 and the upstream extension 358 of the stator root platform 352. The acoustic attenuator 360 which is provided on the radially-inner boundary 325 of the interstage flow region 327 therefore comprises only the fan attenuator 360a and the stator attenuator 360c. The attenuators 360a, c may be flush-mounted tapered in parts like those of **Figure 2** to provide smooth airflow transitions.

Referring to **Figures 3, 4, and 5****,** in other examples, one part of the attenuator 160,260,360 may be omitted. For example, only the seal attenuator 160b, 260b may be provided and the upstream extension 158 or the downstream extension 236 may be left uncovered, provided that at least a portion of the radially-inner boundary 25 of the interstage flow region 27 has an acoustic attenuator provided thereon. Thus, it will be apparent that the attenuator need not cover the entire axial length of the radially-inner boundary of the interstage flow region.

It will be understood that the invention is not limited to the embodiments above-described and various modifications and improvements can be made without departing from the concepts described herein as long as they fall within the scope defined by the claims. Except where mutually exclusive, any of the features may be employed separately or in combination with any other features and the disclosure extends to and includes all combinations and sub-combinations of one or more features described herein.

## Claims

1. A gas turbine engine (10) comprising:
a fan (13) comprising a plurality of fan blades (30);
a support structure downstream of the fan comprising an engine section stator (23) configured to guide air received from the fan, the fan being rotatable with respect to the engine section stator;
an interstage flow region defined between the fan blades and the engine section stator; and
**characterised in that** an acoustic attenuator (60a, 60b, 60c) is provided on at least a portion of a rotatable section (42, 46, 34) of the radially-inner boundary of the interstage flow region to attenuate acoustic waves in the interstage flow region.

2. A gas turbine engine as claimed in claim 1, wherein the fan comprises a fan platform (34), and wherein the acoustic attenuator is arranged on a portion of the fan platform.

3. A gas turbine engine according to claim 1 or claim 2, wherein at least a part of the acoustic attenuator extends between the fan blades to define at least a portion of the radially inner boundary of the interstage flow region.

4. A gas turbine engine according to any one of the preceding claims, wherein at least a part of the acoustic attenuator extends downstream of the fan blades to define at least a portion of the radially-inner boundary of the interstage flow region.

5. A gas turbine engine as claimed in claim 2, wherein the fan platform is defined by a fan root platform (34) which intersects the plurality of fan blades and by a fan seal structure (42) downstream of the fan root platform, wherein the fan seal structure is configured to seal with the support structure.

6. A gas turbine engine as claimed in claim 5, wherein the acoustic attenuator is arranged on a downstream extension (36) of the fan root platform which extends downstream of the fan blades to define at least a portion of the radially-inner boundary of the interstage flow region.

7. A gas turbine engine as claimed in claim 6, wherein the downstream extension is formed integrally with the fan root platform.

8. A gas turbine engine as claimed in claim 6 or 7, wherein the acoustic attenuator is arranged on the fan seal structure to define at least a portion of the radially-inner boundary of the interstage flow region.

9. A gas turbine engine as claimed in any preceding claim, wherein the support structure comprises a stator root platform (52, 58) extending upstream of the engine section stator, and wherein at least a part of the acoustic attenuator (60b) is arranged on the stator root platform to define at least a portion of the radially-inner boundary of the interstage flow region.

10. A gas turbine engine as claimed in any preceding claim where the acoustic attenuator is provided on substantially all of the radially-inner boundary of the interstage flow region.

11. A gas turbine engine as claimed in any preceding claim, wherein the engine further comprises a nacelle (21) or outer casing (26) that houses the fan and the engine section stator and wherein a radially-outer boundary of the interstage flow region is defined by the nacelle or the outer casing.

12. A gas turbine engine as claimed in any preceding claim, wherein the acoustic attenuator comprises a bulk absorber.

13. A gas turbine engine as claimed in any preceding claim, wherein the acoustic attenuator comprises one or more Helmholtz resonators.

14. A gas turbine engine as claimed in any preceding claim, wherein the acoustic attenuator is flush-mounted.

## Patentansprüche

1. Gasturbinentriebwerk (10), umfassend:
einen Fan (13), der eine Vielzahl von Fanschaufeln (30) umfasst;
eine Tragstruktur stromabwärts des Fans, die einen Triebwerksteil-Stator (23) umfasst, der konfiguriert ist, um aus dem Fan empfangene Luft zu leiten, wobei der Fan in Bezug auf den Triebwerksteil-Stator drehbar ist;
einen Zwischenstufenströmungsbereich, der zwischen den Fanschaufeln und dem Triebwerksteil-Stator definiert ist; und
**dadurch gekennzeichnet, dass** ein Schalldämpfer (60a, 60b, 60c) an zumindest einem Teil eines drehbaren Abschnitts (42, 46, 34) des radial inneren Randes des Zwischenstufenströmungsbereiches bereitgestellt ist, um die Schallwellen im Zwischenstufenströmungsbereich zu dämpfen.

2. Gasturbinentriebwerk nach Anspruch 1, wobei der Fan eine Fanplattform (34) umfasst, und wobei der Schalldämpfer auf einem Teil der Fanplattform angeordnet ist.

3. Gasturbinentriebwerk nach Anspruch 1 oder Anspruch 2, wobei sich zumindest ein Teil des Schalldämpfers zwischen den Fanschaufeln erstreckt, um zumindest einen Teil des radial inneren Randes des Zwischenstufenströmungsbereiches zu definieren.

4. Gasturbinentriebwerk nach einem der vorhergehenden Ansprüche, wobei sich zumindest ein Teil des Schalldämpfers stromabwärts der Fanschaufeln erstreckt, um zumindest einen Teil des radial inneren Randes des Zwischenstufenströmungsbereiches zu definieren.

5. Gasturbinentriebwerk nach Anspruch 2, wobei die Fanplattform durch eine Fanfußplattform (34), die die Vielzahl von Fanschaufeln kreuzt, und durch eine Fandichtungsstruktur (42) stromabwärts der Fanfußplattform definiert wird, wobei die Fandichtungsstruktur konfiguriert ist, um die Tragstruktur abzudichten.

6. Gasturbinentriebwerk nach Anspruch 5, wobei der Schalldämpfer auf einer stromabwärtigen Verlängerung (36) der Fanfußplattform angeordnet ist, die sich stromabwärts der Fanschaufeln erstreckt, um zumindest einen Teil des radial inneren Randes des Zwischenstufenströmungsbereiches zu definieren.

7. Gasturbinentriebwerk nach Anspruch 6, wobei die stromabwärtige Verlängerung einstückig mit der Fanfußplattform gebildet ist.

8. Gasturbinentriebwerk nach Anspruch 6 oder 7, wobei der Schalldämpfer auf der Fandichtungsstruktur angeordnet ist, um zumindest einen Teil des radial inneren Randes des Zwischenstufenströmungsbereiches zu definieren.

9. Gasturbinentriebwerk nach einem der vorhergehenden Ansprüche, wobei die Tragstruktur eine sich stromaufwärts des Triebwerksteil-Stators erstreckende Statorfußplattform (52, 58) umfasst, und wobei zumindest ein Teil des Schalldämpfers (60b) auf der Statorfußplattform angeordnet ist, um zumindest einen Teil des radial inneren Randes des Zwischenstufenströmungsbereiches zu definieren.

10. Gasturbinentriebwerk nach einem der vorhergehenden Ansprüche, bei dem der Schalldämpfer auf dem im Wesentlichen gesamten radial inneren Rand des Zwischenstufenströmungsbereiches bereitgestellt ist.

11. Gasturbinentriebwerk nach einem der vorhergehenden Ansprüche, wobei das Triebwerk ferner eine Gondel (21) oder ein äußeres Gehäuse (26) umfasst, die/das den Fan und den Triebwerksteil-Stator aufnimmt, und wobei ein radial äußerer Rand des Zwischenstufenströmungsbereiches durch die Gondel oder das äußere Gehäuse definiert ist.

12. Gasturbinentriebwerk nach einem der vorhergehenden Ansprüche, wobei der Schalldämpfer einen Bulk-Absorber umfasst.

13. Gasturbinentriebwerk nach einem der vorhergehenden Ansprüche, wobei der Schalldämpfer einen oder mehrere Helmholtz-Resonatoren umfasst.

14. Gasturbinentriebwerk nach einem der vorhergehenden Ansprüche, wobei der Schalldämpfer bündig montiert ist.

## Revendications

1. Turbine à gaz (10) comprenant :
une soufflante (13) comprenant une pluralité d'aubes de soufflante (30) ;
une structure de support en aval de la soufflante, comprenant un stator de section de réacteur (23) configuré pour guider l'air reçu de la soufflante, la soufflante pouvant pivoter par rapport au stator de section de réacteur ;
une zone d'écoulement inter-étage définie entre les aubes de soufflante et le stator de section de réacteur ; et
**caractérisée en ce qu'**un atténuateur acoustique (60a, 60b, 60c) est prévu sur au moins une partie d'une section pivotante (42, 46, 34) de la limite radialement intérieure de la zone d'écoulement inter-étage pour atténuer les ondes acoustiques dans la zone d'écoulement inter-étage.

2. Turbine à gaz selon la revendication 1, dans laquelle la soufflante comprend une plate-forme de soufflante (34), et dans laquelle l'atténuateur acoustique est disposé sur une partie de la plate-forme de soufflante.

3. Turbine à gaz selon la revendication 1 ou la revendication 2, dans laquelle au moins une partie de l'atténuateur acoustique s'étend entre les aubes de soufflante pour définir au moins une partie de la limite radialement intérieure de la zone d'écoulement inter-étage.

4. Turbine à gaz selon l'une quelconque des revendications précédentes, dans laquelle au moins une partie de l'atténuateur acoustique s'étend en aval des aubes de soufflante pour définir au moins une partie de la limite radialement intérieure de la zone d'écoulement inter-étage.

5. Turbine à gaz selon la revendication 2, dans laquelle la plate-forme de soufflante est définie par une plate-forme de fond de soufflante (34) qui coupe la pluralité d'aubes de soufflante et par une structure d'étanchéité de soufflante (42) en aval de la plate-forme de fond de soufflante, dans laquelle la structure d'étanchéité de soufflante est configurée pour assurer l'étanchéité avec la structure de support.

6. Turbine à gaz selon la revendication 5, dans laquelle l'atténuateur acoustique est disposé sur une extension aval (36) de la plate-forme de fond de soufflante qui s'étend en aval des aubes de soufflante pour définir au moins une partie de la limite radialement intérieure de la zone d'écoulement inter-étage.

7. Turbine à gaz selon la revendication 6, dans laquelle l'extension aval fait partie intégrante de la plate-forme de fond de soufflante.

8. Turbine à gaz selon la revendication 6 ou 7, dans laquelle l'atténuateur acoustique est disposé sur la structure d'étanchéité de soufflante pour définir au moins une partie de la limite radialement intérieure de la zone d'écoulement inter-étage.

9. Turbine à gaz selon l'une quelconque des revendications précédentes, dans laquelle la structure de support comprend une plate-forme de fond de stator (52, 58) s'étendant en amont du stator de section de réacteur, et dans laquelle au moins une partie de l'atténuateur acoustique (60b) est disposée sur la plate-forme de fond de stator pour définir au moins une partie de la limite radialement intérieure de la zone d'écoulement inter-étage.

10. Turbine à gaz selon l'une quelconque des revendications précédentes, où l'atténuateur acoustique est prévu sur substantiellement la totalité de la limite radialement intérieure de la zone d'écoulement inter-étage.

11. Turbine à gaz selon l'une quelconque des revendications précédentes, la turbine comprenant en outre une nacelle (21) ou un carter extérieur (26) qui loge la soufflante et le stator de section de réacteur et dans laquelle une limite radialement extérieure de la zone d'écoulement inter-étage est définie par la nacelle ou le carter extérieur.

12. Turbine à gaz selon l'une quelconque des revendications précédentes, dans laquelle l'atténuateur acoustique comprend un absorbeur de volume.

13. Turbine à gaz selon l'une quelconque des revendications précédentes, dans laquelle l'atténuateur acoustique comprend un ou plusieurs résonateurs de Helmholtz.

14. Turbine à gaz selon l'une quelconque des revendications précédentes, dans laquelle l'atténuateur acoustique est encastré.
